# EUROPÄISCHE PATENTANMELDUNG

(11) **EP 2 221 244 A2**
(43) Veröffentlichungstag der Anmeldung: **25.08.2010**
(21) Anmeldenummer: 10153440.2
(22) Anmeldetag: 12.02.2010
(51) Int. Cl.: B62K 19/36

(54) **Längenverstellbare Sattelstütze**

(30) Priorität: 19.02.2009 DE 102009009645; 19.02.2009 US 153678 P
(71) Anmelder: Klieber, Jochen, 83342 Tacherting (DE)
(72) Erfinder: Klieber, Jochen, 83342 Tacherting (DE)
(74) Vertreter: Kopf, Korbinian Paul

(57) **Zusammenfassung**

Die Erfindung betrifft eine längenverstellbare Sattelstütze 1 für ein Fahrrad, wobei ein Standrohr 3 eine ersten Öffnung 6 und eine zweite der ersten Öffnung 6 gegenüber liegende Öffnung 9 aufweist. Weiterhin weist die längenverstellbare Sattelstütze 1 ein Gleitrohr 2, eine Feststellvorrichtung 5 und eine Energieübertragungsvorrichtung 17 auf. Das Gleitrohr 2 ist durch die erste Öffnung 6 in das Standrohr 3 geführt und entlang einer Längserstreckungsrichtung des Standrohres 3 verschiebbar. Weiterhin ist das Gleitrohr 2 relativ zum Standrohr 3 von einer ersten in eine zweite Position und umgekehrt bewegbar. Hierbei ist eine Überdeckung zwischen Standrohr 3 und Gleitrohr 2 in der ersten Position größer als in der zweiten Position. Die Feststellvorrichtung 5 ist von einer feststellenden Position in eine freigebende Position und umgekehrt verbringbar, wobei in der feststellenden Position das Gleitrohr 2 zum Standrohr 3 festgelegt ist. Die Energieübertragungsvorrichtung 17 ist eingerichtet, um Energie von einem äußeren bereitzustellenden Betätigungselement an die Feststellvorrichtung 5 zum Lösen und/oder Feststellen zu übertragen. Die Energieübertragungsvorrichtung 17, mindestens wenn sich das Gleitrohr 2 in der zweiten Position befindet, ist von einem äußeren bereitzustellenden Betätigungselement durch die zweite Öffnung 9 des Standrohres 3 bis zur Feststellvorrichtung 5 geführt.

## Beschreibung

### GEBIET DER ERFINDUNG

Die vorliegende Erfindung betrifft eine längenverstellbare Sattelstütze für ein Fahrrad mit einem Standrohr, entlang dem ein Gleitrohr verschiebbar ist, einen Fahrradrahmen mit einer längenverstellbaren Sattelstütze und ein Fahrrad mit einem Fahrradrahmen.

### HINTERGRUND DER ERFINDUNG

Bei heutigen Mountainbikerennen wechseln sich Anstiege und Abfahrten, die zumeist steilerer Natur sind, ab. Um gerade bei solchen steilen Abfahrten das Fahrrad ausbalancieren zu können, ist es notwendig, dass der Fahrer sein Gesäß hindernisfrei hinter den Sattel in Richtung der Hinterradachse schieben kann. In der Vergangenheit hat hierzu der Fahrer, insbesondere wenn es sich um längere Abfahrten gehandelt hat, die Sattelstütze in dem Sitzrohr des Fahrrades versenkt und dort fixiert. Durch die gewonnene Freiheit zwischen Sattel und Gesäß war es dem Fahrer nun möglich, problemlos sein Gesäß hinter den Sattel zu schieben. Jedoch konnte das Versenken der Sattelstütze in den Rahmen nur dadurch erfolgen, indem der Fahrer einen Zwischenstopp einlegte. Dies kostete in einem Rennen wertvolle Zeit, so dass man auf diese Zwischenstopps verzichtete, den Abstand zwischen Sattel und Tretlager also nicht verringerte und damit in Kauf nahm, bei steileren Abfahrten eventuell an der Sattelhinterkante hängen zu bleiben. Ein Hängenbleiben an der Hinterkante des Sattels führt unter widrigen Umständen zu einem Sturz.

In neuerer Zeit entstanden versenkbare Sattelstützen. Diese besitzen den Vorteil, dass der Abstand zwischen dem Gesäß und dem Sattel in der Höhe während der Fahrt variiert werden kann. Somit kann die Sattelstütze also während der Fahrt zum einen in eine erste, eingefahrene Position verbracht werden, die ideal zum Bergabfahren ist, und zum anderen in eine zweite, ausgefahrene Position, die optimal zum bergauf Pedalieren ist.

Um die Sattelstütze teleskopartig zu verbringen, gibt es eine erste Möglichkeit, bei der unterhalb der Sattelnase ein Auslösegriff befestigt ist. Um die Sattelstütze zusammenzufahren, muss der Fahrer eine Hand vom Lenker lösen, diese zwischen seine Oberschenkel zu dem Auslösegriff führen, den Auslösegriff betätigen und mit seinem Körpergewicht die Sattelstütze zusammendrücken. Eine Synchronisierung dieser Bewegungsabläufe stellt eine große Herausforderung an die Koordinationsfähigkeit des Fahrers dar, zumal er bei dem Verstellen der Sattelstütze zum einen einhändig fährt und zum anderen sowohl auf die Fahrstrecke konzentrieren als auch weiterhin pedalieren muss.

Eine zweite Möglichkeit zur Längenverstellung der Sattelstütze besteht darin, dass ein Bowdenzug vom Lenker zur Sattelstütze unterhalb des Sattels gezogen ist. Das zum Lenker weisende Ende des Bowdenzuges ist mit einem am Lenker befestigten Betätigungselement verbunden. Somit kann nun die Sattelstütze angesteuert werden, ohne dass eine Hand vom Lenker genommen werden muss. Das andere Ende des Bowdenzuges ist fest mit der Sattelstütze unterhalb des Sattels verbunden. Es hat sich jedoch gezeigt, dass das Ende des Bowdenzuges, das an der Sattelstütze befestigt ist, gerade im eingefahrenen Zustand der Sattelstütze eine Schlaufe bildet. Bei heutigen Verstellhöhen von bis zu 200 mm bildet sich die Schlaufe in einer solchen Größe aus, dass sie von den Fahrern als störend empfunden wird. Ein Hängenbleiben des Fahrers an dieser Schlaufe bei der Verlagerung seines Gesäßes zum Ausbalancieren des Fahrrades hinter oder auch vor den Sattel ist nun nicht mehr auszuschließen.

### ZUSAMMENFASSUNG DER ERFINDUNG

Demnach liegt der Erfindung die Aufgabe zugrunde, eine längenverstellbare Sattelstütze für ein Fahrrad anzugeben, die keine den Fahrer behindernde Schlaufe im Bereich des Sattels bildet.

Die Aufgabe wird gelöst durch den Gegenstand der jeweiligen unabhängigen Ansprüche. Weitere Ansprüche sind in den jeweiligen abhängigen Ansprüchen beschrieben.

In einer Ausgestaltung der Erfindung weist eine längenverstellbare Sattelstütze für ein Fahrrad ein Standrohr mit einer ersten Öffnung und einer zweiten der ersten Öffnung gegenüber liegenden Öffnung auf. Weiterhin weist die längenverstellbare Sattelstütze ein Gleitrohr, eine Feststellvorrichtung und eine Energieübertragungsvorrichtung auf. Das Gleitrohr ist durch die erste Öffnung in das Standrohr geführt und entlang einer Längserstreckungsrichtung des Standrohres verschiebbar. Weiterhin ist das Gleitrohr relativ zum Standrohr von einer ersten in eine zweite Position und umgekehrt bewegbar. Hierbei ist eine Überdeckung zwischen Standrohr und Gleitrohr in der ersten Position größer als in der zweiten Position. Die Feststellvorrichtung ist von einer feststellenden Position in eine freigebende Position und umgekehrt verbringbar, wobei in der feststellenden Position das Gleitrohr zum Standrohr festgelegt ist. Die Energieübertragungsvorrichtung ist eingerichtet, um Energie von einem äußeren bereitzustellenden Betätigungselement an die Feststellvorrichtung zum Lösen und/oder Feststellen zu übertragen. Die Energieübertragungsvorrichtung, mindestens wenn sich das Gleitrohr in der zweiten Position befindet, ist von einem äußeren bereitzustellenden Betätigungselement durch die zweite Öffnung des Standrohres bis zur Feststellvorrichtung geführt.

Die Feststellvorrichtung kann beispielweise als Brems- oder Sperrvorrichtung ausgebildet sein. Eine Bremswirkung durch die Bremsvorrichtung kann beispielsweise dadurch erreicht werden, dass der Reibkoeffizient zwischen Gleitrohr und Standrohr erhöht wird. Ein Sperren durch eine Sperrvorrichtung kann beispielsweise dadurch hervorgerufen werden, dass Klinken in entsprechende Vertiefungen an dem Gleitrohr oder dem Standrohr eingreifen können. Die längenverstellbare Sattelstütze besteht somit aus einem Rohrsatz mit mindestens zwei ineinander gleitenden teleskopierbaren Rohren, wobei mittels der Feststelleinrichtung die zwei Rohre gegeneinander blockierbar sind. An einem Ende des Rohrsatzes, also am Gleitrohr, befindet sich eine Aufnahme für einen Fahrradsattel. Durch eine der Aufnahme gegenüberliegenden Rohröffnung des Rohrsatzes wird die Energieübertragungsvorrichtung der Feststellvorrichtung zugeführt. Somit wird, wenn sich das Gleitrohr in der ersten Position befindet, also der Rohrsatz seine minimale Länge aufweist, eine den Fahrer in seiner Bewegungsfreiheit behindernden oder zumindest irritierenden Schlaufenbildung der Energieübertragungsvorrichtung vermieden.

In einer weiteren Ausgestaltung der Erfindung sind das Gleitrohr und das Standrohr zueinander verdrehsicher ausgeformt.

Somit verdreht sich der Sattel bei einem Verbringen der Sattelstütze an der ersten Position in die zweite Position und umgekehrt nicht. Dies kann beispielsweise durch einen im Gleitrohr ausgebildeten Zapfen erfolgen, der in einer entsprechenden im Standrohr ausgebildeten Nut läuft. Somit kann das Gleitrohr eine glatte leicht zu reinigende Mantelfläche aufweisen, wenn sich das Gleitrohr in der zweiten, ausgefahrenen Position befindet. Natürlich kann die Verdrehsicherheit auch dadurch erzeugt werden, dass die geometrische Außenkontur des Gleitrohres entsprechend gewählt wurde. Vorstellbar ist beispielsweise eine Sternkontur oder auch eine elliptische Kontur. Natürlich muss die Öffnung im Standrohr entsprechend angepasst sein. Beim bergauf Pedalieren ist die Sattelstütze in der zweiten, ausgefahrenen Position mit einer fest installierten Sattelstütze vergleichbar. Beim Bergabfahren, wenn sich also das Gleitrohr in der ersten, eingefahrenen Position befindet, kann der Fahrer die Sattelnase zwischen seine Oberschenkel spannen, ohne dass die Sattelnase seitlich ausweichen kann. Dies führt zu einer besseren Beherrschung des Fahrrades. An dieser Stelle soll erwähnt werden, dass es auch möglich sein kann, die Sattelstütze in zwischen der ersten und der zweiten Position liegenden Zwischenpositionen zu verschieben und dort mittels der Feststellvorrichtung festzustellen.

In einer weiteren Ausgestaltung der Erfindung ist die Feststellvorrichtung an dem Gleitrohr angeordnet.

Natürlich könnte die Feststellvorrichtung auch im Standrohr integriert sein. Es hat sich jedoch gezeigt, dass es konstruktiv einfacher realisierbar und zudem gewichtsmäßig leichter ist, wenn die Feststellvorrichtung im Gleitrohr integriert ist. Zudem kann die Mantelfläche des zylinderförmig gestalteten Standrohres glatt ausgeführt werden, so dass es keine über die Mantelfläche überstehenden Vorsprünge gibt. Dadurch, dass das Standrohr zudem einen über seine gesamte Länge konstanten kreisförmigen Querschnitt aufweist, kann es in einem entsprechenden Sitzrohr eines Fahrradrahmens über seine gesamte Länge gespannt werden. Somit kann das Standrohr der längenverstellbaren Sattelstütze, wenn sich das Gleitrohr in der zweiten Position befindet, in einer solchen Position mit dem Fahrradrahmen verbunden werden, dass der Abstand zwischen der Kurbel und dem Sattel, genauer gesagt der Abstand zwischen Tretlager und Sitzfläche des Sattels, für den Fahrer optimal ist. Diese einmal gewählte Einstellung braucht während des Betriebes des Fahrrades durch den Fahrer nicht mehr gewechselt zu werden.

In einer weiteren Ausgestaltung der Erfindung ist die Feststellvorrichtung durch eine elektrische, pneumatische, hydraulische und/oder mechanische Energieübertragungsvorrichtung feststellbar und/oder lösbar.

Das elektrische Feststellen oder Lösen der Feststellvorrichtung kann beispielsweise durch einen mit der Feststellvorrichtung verbundenen Servomotor erfolgen. In diesem Fall ist die elektrische Energieübertragungsvorrichtung ein Kabel, das die elektrische Energie beispielsweise in Form von Batterien an den Servomotor überträgt. Bei einer pneumatischen oder hydraulischen Energieübertragungsvorrichtung kann es sich um einen Schlauch oder ein Rohr handeln, durch das das entsprechende Medium wie beispielsweise ein Gas oder ein Fluid zum Betätigen der Feststellvorrichtung fließt. Unter einer mechanischen Energieübertragungsvorrichtung ist beispielsweise ein Bowdenzug zu verstehen, wie er bereits eingangs erwähnt wurde.

In einer weiteren Ausgestaltung der Erfindung ist die Energieübertragungsvorrichtung zumindest teilweise spiralenförmig ausgeformt.

Ein Ende der spiralenförmigen Ausformung der Energieübertragungsvorrichtung kann an der Feststellvorrichtung angebracht sein und das andere Ende an einem feststehenden Teil wie beispielsweise einem Bauteil eines Fahrradrahmens. Wenn nun das Gleitrohr mit der Feststellvorrichtung von der ersten Position in die zweite Position oder umgekehrt verschoben wird, kann diese Längenänderung durch die Spirale aufgenommen werden, indem sich die Spirale längt oder verkürzt.

In einer weiteren Ausgestaltung der Erfindung ist die Energieübertragungsvorrichtung zu mindestens einer Bucht geformt, wobei die Bucht eine Öffnung aufweist, die entweder zum Standrohr hin oder vom Standrohr weg weist.

Somit bildet die Energieübertragungsvorrichtung mindestens eine Schlaufe. Auch hierbei ist eine Ende der Schlaufe mit der Feststellvorrichtung verbunden und einem dem einen Ende gegenüber liegenden anderen Ende fest mit einem feststehenden Teil wie beispielsweise einem Bauteil eines Fahrradrahmens. Wenn nun das Gleitrohr von seiner ersten Position in seine zweite Position oder umgekehrt verbracht wird, verändert dies lediglich die Länge der Schlaufe ohne jedoch Kräfte auf die Befestigung an dem feststehenden Teil oder auf die Feststellvorrichtung auszuüben.

Natürlich ist es auch möglich, die Buchten der Energieübertragungsvorrichtung so auszubilden, dass diese quer zur Längserstreckung des Standrohres geöffnet sind. In ihrer Funktionsweise ähnelt sich eine derartige Ausgestaltung der Energieübertragungsvorrichtung der weiter oben beschriebenen spiralenförmigen Ausgestaltung.

In einer weiteren Ausgestaltung der Erfindung ist die Energieübertragungsvorrichtung durch eine Drehstange mit einem Mitnehmer gebildet, wobei entlang der Drehstange entweder die Feststellvorrichtung und/oder der Mitnehmer verschiebbar angeordnet ist.

Die Drehstange kann beispielsweise durch eine Rundstange gebildet sein, die über ihre gesamte Länge unveränderlich abgeflacht ist. Der Mitnehmer, beispielsweise in Form einer Scheibe, besitzt in seinem Zentrum eine Öffnung, die derart geformt ist, dass die Drehstange durch dieses Zentrum hindurch gesteckt werden kann. Beispielsweise ist der Mitnehmer entlang der Drehstange verschiebbar. Auch kann der Mitnehmer mit der Drehstange fest verbunden sein und die Feststellvorrichtung entlang der Drehstange verschiebbar sein. Ein Drehen des Mitnehmers durch die Energieübertragungsvorrichtung führt auch zu einem Drehen der Drehstange. Die Drehstange greift so in die Feststellvorrichtung ein, dass das Drehen der Drehstange zu einem Lösen oder zu einem Feststellen der Feststellvorrichtung führt.

In einer weiteren Ausgestaltung der Erfindung weist die längenverstellbare Sattelstütze ein Betätigungselement auf. Das Betätigungselement ist mit der Energieübertragungsvorrichtung verbunden und eingerichtet, durch ein Betätigen des Betätigungselements ein Lösen und/oder Feststellen des Feststellelements zu bewirken.

Dieses Betätigungselement kann beispielsweise als ein Drehknopf, Druckknopf, Umlenkhebel oder auch Schwenkhebel ausgebildet sein. Mittels dieses Betätigungshebels, der fest installiert ist, kann die Feststellvorrichtung gelöst und/oder festgestellt werden.

In einer weiteren Ausgestaltung der Erfindung weist die längenverstellbare Sattelstütze ferner eine Energiezuführungsvorrichtung auf. Hierbei ist ein erstes Ende der Energiezuführungsvorrichtung mit dem Betätigungselement verbunden und ein dem ersten Ende gegenüber liegendes zweites Ende der Energiezuführungsvorrichtung mit der Energieübertragungsvorrichtung verbunden.

Diese Energiezuführungsvorrichtung kann beispielsweise an dem Fahrradrahmen fest verlegt sein. Sie ermöglicht es, das Betätigungselement wahlweise zu befestigen, natürlich insbesondere am Fahrradlenker in der Nähe des Lenkergriffs. Somit ist es dem Fahrer möglich, die verstellbare Sattelstütze zu betätigen, ohne dass er die Hand vom Lenker nehmen muss. Die Energiezuführungsvorrichtung kann mit der Energieübertragungsvorrichtung entweder fest oder lösbar verbunden sein. Das lösbare Verbindungselement kann eine Stecker-Kupplung-Kombination sein, wobei der Stecker beispielsweise an der Energiezuführungsvorrichtung und die Kupplung an der Energieübertragungsvorrichtung befestigt ist. Die Energiezuführungsvorrichtung kann beispielsweise ein Kabel zur Übertragung von elektrischer Energie oder ein Schlauch oder Rohr zur Übertragung eines gasförmigen oder flüssigen Mediums sein. Auch kann die Energiezuführungsvorrichtung beispielsweise zur Übertragung von mechanischer Energie als ein Bowdenzug ausgebildet sein, der beispielsweise an der Außenseite des Mitnehmers angreift.

In einer weiteren Ausgestaltung der Erfindung ist ein Fahrradrahmen mit einer längsverstellbaren Sattelstütze versehen, wobei der Fahrradrahmen ferner ein Sitzrohr mit einer an einem Ende befindlichen Öffnung aufweist. Hierbei ist das Standrohr an durch die Öffnung in das Sitzrohr geführt und das Standrohr in dem Sitzrohr in einer vorgewählten Position befestigt. Weiterhin verläuft die Energieübertragungsvorrichtung innerhalb des Sitzrohres.

Somit ist eine Ausgestaltung möglich, bei der zwischen dem am Lenker montierten Betätigungselement und dem Sitzrohr entlang des Rahmens die Energiezuführungsvorrichtung verläuft. Die Energiezuführungsvorrichtung ist mit dem Rahmen verbunden. Ein Verschieben des Gleitrohres von der ersten Position in die zweite Position und umgekehrt führt zu keiner Längenänderung der Energiezuführungsvorrichtung und damit zu keiner Schlaufenbildung. Es wird lediglich die beispielsweise in Spiralenform ausgebildete Energieübertragungsvorrichtung, die innerhalb des Sitzrohres verläuft, entsprechend der Längenänderung des Gleitrohres relativ zum Standrohr gestreckt oder gestaucht. Somit führt eine Längenänderung der Sattelstütze zu keiner Längenänderung der Energiezuführungsvorrichtung.

In einer weiteren Ausgestaltung der Erfindung ist die Energiezuführungsvorrichtung in das Sitzrohr hineingeführt bzw. die Energieübertragungsvorrichtung aus dem Sitzrohr herausgeführt.

In der Regel, insbesondere bei der Verwendung einer elektrischen, pneumatischen oder hydraulischen Energieübertragung, läuft die Energiezuführungsvorrichtung bis an das Sitzrohr heran und wird an dieser Stelle mit der Energieübertragungsvorrichtung verbunden. Hierbei können die Energiezuführungsvorrichtung und die Energieübertragungsvorrichtung auch einstückig ausgebildet sein. Ebenso ist es möglich, die Energiezuführungsvorrichtung mit der Energieübertragungsvorrichtung lösbar zu verbinden, beispielsweise durch eine Stecker-Kupplung-Kombination. Hierbei kann das Sitzrohr als Halter für den/die mit der Energieübertragungsvorrichtung verbundene/n Stecker/Kupplung genutzt werden. Diese beschriebenen Ausführungen gelten sowohl, wenn die Einheit Energiezuführungsvorrichtung-Energieübertragungsvorrichtung durch die Wandung des Sitzrohres geführt ist, als auch, wenn die Einheit Energiezuführungsvorrichtung- Energieübertragungsvorrichtung durch die der Sattelstütze gegenüber liegende Öffnung des Sitzrohres geführt ist. Gerade bei der Nutzung der Drehstange mit dem Mitnehmer als Energieübertragungsvorrichtung kann es sinnvoll sein, den Mitnehmer als Bestandteil der Energieübertragungsvorrichtung zumindest teilweise aus dem Sitzrohr herauszuführen. Hierdurch erleichtert sich die Befestigung der Energiezuführungsvorrichtung beispielsweise in Form eines Bowdenzuges an dem Mitnehmer.

In einer weiteren Ausgestaltung der Erfindung weist der Fahrradrahmen ein Unterrohr auf. Diese Energiezuführungsvorrichtung ist zumindest teilweise entlang des Unterrohrs verlegt.

Bei der Verwendung von sogenannten Diamantrahmen wird die Verbindung zwischen Energiezuführungsvorrichtung und Energieübertragungsvorrichtung meist in der Wandung des Sitzrohrs in der Nähe des Tretlagers liegen. Von daher kann es sinnvoll sein, die Energiezuführungsvorrichtung entlang des Unterrohres zu verlegen, da dies die kürzeste Verbindung zwischen Betätigungselement und Energieübertragungsvorrichtung darstellen kann. Natürlich ist es auch möglich, die Energiezuführungsvorrichtung durch die Tretlageraufnahme hindurch zur Sitzrohröffnung zu führen.

In einer weiteren Ausgestaltung der Erfindung ist die Energiezuführungsvorrichtung zumindest teilweise im Unterrohr des Fahrradrahmens verlegt.

Eine Verlegung der Energiezuführungsvorrichtung im Unterrohr schützt die Energiezuführungsvorrichtung vor äußeren Einflüssen. Somit können durch ein Vorderrad des Fahrrades empor geschleuderte Steine die Energiezuführungsvorrichtung nicht beschädigen. Auch stellt eine Verlegung der Energiezuführungsvorrichtung im Unterrohr ein ästhetisches Aussehen dar. Gerade beim Diamantrahmen kann die Energiezuführungsvorrichtung innerhalb des Unterrohres um das Tretlager herum direkt mit der am Sitzrohr verlaufenden Energieübertragungsvorrichtung verbunden werden. Somit wird eine in der Nähe des Lenkkopflagers in das Unterrohr eintretende Energiezuführungsvorrichtung mit der Energieübertragungsvorrichtung bis zur Feststellvorrichtung vollständig innerhalb des Fahrradrahmens verlaufen.

In einer weiteren Ausgestaltung der Erfindung weist der Fahrradrahmen ein Oberrohr auf, wobei das Oberrohr mit dem Sitzrohr verbunden ist. Hierbei ist die Energiezuführungsvorrichtung zumindest teilweise innerhalb des Oberrohres verlegt.

Bei der Verwendung von sogenannten Y-Fahrradrahmen kann es sich als unzweckmäßig erweisen, die Energiezuführungsvorrichtung im oder am Unterrohr der Energieübertragungsvorrichtung zuzuführen. Somit kann eine Verlegung der Energiezuführungsvorrichtung innerhalb oder auch entlang des Oberrohres sich als beste Verbindung zwischen dem Betätigungselement und der Energieübertragungsvorrichtung erweisen. Auch hier schützt eine Verlegung der Energiezuführungsvorrichtung innerhalb des Oberrohres vor äußeren Einwirkungen.

Gemäß einem weiteren Aspekt der Erfindung ist ein Fahrrad, insbesondere ein Mountainbike, mit einem Fahrradrahmen ausgestattet, wobei das Fahrrad ferner einen Fahrradlenker aufweist. Hierbei ist das Betätigungselement lösbar mit dem Fahrradlenker verbunden.

Wie bereits im Vorhergehenden dargestellt, kann es sich bei dem Betätigungselement beispielsweise um einen Betätigungshebel oder auch um einen Betätigungsknopf handeln. Aus ergonomischer Sicht ist die Anbausituation eines Betätigungsknopfes oder eines Betätigungshebels zu der Betätigungshand des Fahrers unterschiedlich. Dadurch, dass das Betätigungselement lösbar mit dem Fahrradlenker verbunden ist, kann das Betätigungselement so individuell auf den Fahrer eingestellt werden, dass das Betätigungselement durch den Fahrer optimal betätigt werden kann.

Es sollte verstanden werden, dass die oben aufgeführten Merkmale auch kombiniert werden können. Dadurch können sich Wirkungen ergeben, die über die Einzelwirkungen der jeweiligen Merkmale hinausgehen.

### KURZE BESCHREIBUNG DER ZEICHNUNGEN

- Figur 1: zeigt eine längenverstellbare Sattelstütze in einer ersten Position,
- Figur 2: zeigt eine verstellbare Sattelstütze in einer zweiten Position,
- Figur 3: zeigt eine erste Ausführungsform einer Energieübertragungsvorrichtung,
- Figur 4: zeigt eine zweite Ausführungsform einer Energieübertragungsvorrichtung,
- Figur 5: zeigt eine dritte Ausführungsform einer Energieübertragungsvorrichtung,
- Figur 6: zeigt eine vierte Ausführungsform einer Energieübertragungsvorrichtung,
- Figur 7: zeigt eine Draufsicht auf einen Mitnehmer und einen Querschnitt einer Drehstange,
- Figur 8: zeigt eine erste Ausführungsform einer Verlegung einer Energiezuführungsvorrichtung,
- Figur 9: zeigt einen Ausschnitt aus einem Sitzrohr mit einer Stecker-Kupplung-Kombination,
- Figur 10: zeigt eine zweite Ausführungsform einer Verlegung einer Energiezuführungsvorrichtung
- Figur 11: zeigt eine dritte Ausführungsform einer Verlegung einer Energiezuführungsvorrichtung und
- Figur 12: zeigt eine vierte Ausführungsform einer Verlegung einer Energiezuführungsvorrichtung.

### DETAILLIERTE BESCHREIBUNG BEISPIELHAFTER AUSFÜHRUNGSFORMEN

Gleiche oder ähnliche Komponenten in unterschiedlichen Figuren sind mit gleichen Bezugszeichen versehen. Die Darstellungen in den Figuren sind schematisch und nicht maßstäblich.

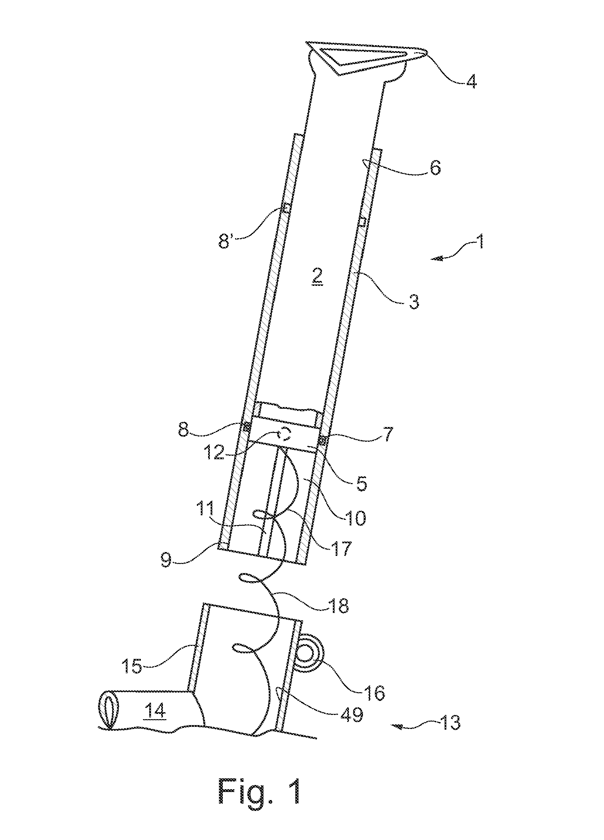

Figur 1 zeigt eine verstellbare Sattelstütze 1 gemäß einer Ausführungsform der Erfindung mit einem Gleitrohr 2 und einem Standrohr 3 in einer ersten Position. Das Gleitrohr 2 besitzt an einem Ende eine Aufnahme 4 für einen Fahrradsattel. An einem der Aufnahme 4 gegenüberliegenden Ende des Gleitrohres 2 ist eine Feststellvorrichtung 5 mit dem Gleitrohr 2 fest verbunden. Das Standrohr 3 besitzt eine erste Öffnung 6, durch die das Gleitrohr 2 in das Standrohr 3 geführt ist. Die Feststellvorrichtung 5 ist als eine Sperrvorrichtung ausgeformt. Die Feststellvorrichtung 5 weist hierzu Klinken 7 auf, die in Vertiefungen 8 oder 8' eingreifen. Die Vertiefungen 8 befinden sich nahe einer der ersten Öffnung 6 gegenüberliegenden zweiten Öffnung 9 in einer Innenwandung 10 des Standrohrs 3. Die Vertiefungen 8' sind nahe der ersten Öffnung 6 auf der Innenwandung 10 des Standrohrs 3 angeordnet. Der Abstand der Vertiefungen 8 und 8' beträgt in der vorliegenden Ausführungsform etwa 200 mm. Das ist auch der Verstellweg des Gleitrohres 2 relativ zum Standrohr 3, den das Gleitrohr 2 von der ersten, zusammengeschobenen Position zur Erreichung einer zweiten, auseinandergezogenen Position entlang einer Längserstreckungsrichtung des Standrohres 3 verschoben wird. Der Verstellbereich, also der Abstand der Vertiefungen 8 zu den Vertiefungen 8' kann auch größer oder kleiner gewählt werden. Um das Gleitrohr 2 gegenüber dem Standrohr 3 verdrehsicher zu gestalten, besitzt das Standrohr 3 in der Innenwandung 10 eine Nut 11, die sich in Längserstreckungsrichtung des Standrohres 3 erstreckt. In diese Nut greift ein Zapfen 12 ein, der mit der Feststellvorrichtung 5 fest verbunden ist.

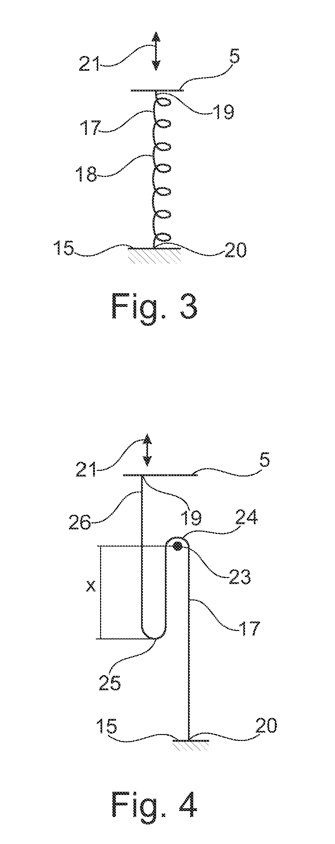

In der Darstellung ist unterhalb der verstellbaren Sattelstütze 1 ein Teilbereich eines Fahrradrahmens 13 mit einem Oberrohr 14, einem daran befestigten Sitzrohr 15 sowie einer an dem Sitzrohr 15 befestigten Sattelklemme 16 dargestellt. Das Standrohr 3 wird in eine Öffnung 49 geführt, die sich an einem Ende des Sitzrohres 15 befindet. Anschließend wird das Standrohr 3 durch den Fahrer um eine vorbestimmte Länge in das Sitzrohr 15 geschoben und an dieser Position durch die Sattelklemme 16 lösbar fixiert. Um die Klinken 7 der Feststellvorrichtung 5 zu lösen und/oder festzustellen, ist mit der Feststellvorrichtung 5 eine Energieübertragungsvorrichtung 17 fest verbunden. Die Energieübertragungsvorrichtung 17 ist in der vorliegenden Ausführungsform zur Übertragung von hydraulischer Energie vorgesehen. Entsprechend besteht die Energieübertragungsvorrichtung 17 aus einem Schlauch 18 (siehe hierzu Figur 3), der spiralenförmig gewickelt ist und durch den Hydraulikflüssigkeit fließt. Der Schlauch verläuft von der Feststellvorrichtung 5 in das Sitzrohr 15 hinein.

In der ersten, zusammengeschobenen Position ist die Länge zwischen der Aufnahme 4 des Gleitrohres 2 und der zweiten Öffnung 9 des Standrohres 3 minimal.

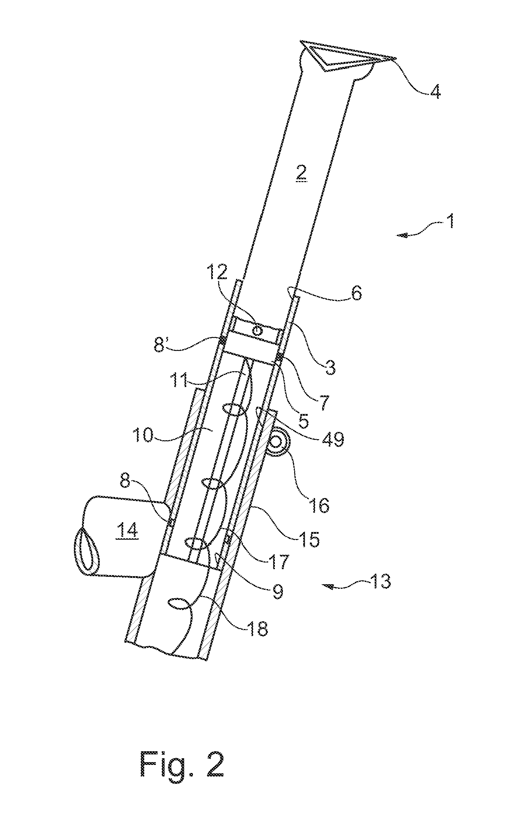

Figur 2 zeigt die in einer zweiten Position befindliche verstellbare Sattelstütze 1 gemäß einer weiteren Ausführungsform der Erfindung, eingebaut in den Fahrradrahmen 13. Hierzu ist das Standrohr 3 auf eine vorbestimmte Länge durch die Öffnung 49 in das Sitzrohr 15 eingeschoben und mit der Sattelklemme 16 lösbar fixiert. Deutlich sichtbar ist, wie sich der spiralenförmig geformte Schlauch 18 von der Feststellvorrichtung 5 in das Sitzrohr 15 hineingeführt ist. In der zweiten Position ist die Länge zwischen der Aufnahme 4 des Gleitrohres 2 und der zweiten Öffnung 9 des Standrohres 3 maximal.

Um das Gleitrohr 2 von der ersten Position (Figur 1) in die zweite Position (Figur 2) zu verbringen, werden mittels der Energieübertragungsvorrichtung 17 die Klinken 7 der Feststellvorrichtung 5 gelöst. Nun verschiebt sich das Gleitrohr 2 selbstständig durch eine hier nicht dargestellte Feder in die zweite Position. Bei Erreichen der zweiten Position rasten die Klinken 7 in die Vertiefungen 8' ein. Während dieses Verschiebevorgangs wird der spiralförmig gestaltete Schlauch 18 gelängt. Ein Verlagern des Gleitrohres 2 von der zweiten Position in die erste Position erfolgt in entsprechender Weise und führt zu einem Stauchen des spiralförmig gestalteten Schlauchs 18.

Figur 3 zeigt eine erste Ausführungsform der Energieübertragungsvorrichtung 17, wobei die Energieübertragungsvorrichtung 17 als ein spiralenförmig gestalteter Schlauch 18 ausgebildet ist. Der Schlauch 18 ist mit einem ersten Ende 19 fest mit der Feststellvorrichtung 5 und mit einem zweiten Ende 20, das dem ersten Ende 19 gegenüberliegt, mit dem Sitzrohr 15 fest verbunden. Wenn nun das Gleitrohr 2 mit der Feststellvorrichtung 5 entlang des Doppelpfeils 21 verschoben wird, kommt es zu einer Dehnung oder einer Stauchung des spiralförmig gestalteten Schlauchs 18, respektive der Spirale.

Figur 4 zeigt eine zweite Ausführungsform der Energieübertragungsvorrichtung 17, wobei die Energieübertragungsvorrichtung 17 hier als ein biegeschlaffes Kabel 22 ausgebildet ist. Auch das Kabel 22 weist ein erstes Ende 19 und ein zweites Ende 20 auf. Das erste Ende 19 ist mit einem Servomotor, der hier nicht dargestellt ist an die Feststellvorrichtung 5 angeflanscht ist, verbunden. Das zweite Ende 20 ist mit dem Sitzrohr 15 fest verbunden. Das Kabel 22 ist erheblich länger als der Abstand zwischen der Feststellvorrichtung 5 und der Befestigung am Sitzrohr 15. Das Kabel 22 wird über einen Dorn 23 geführt, der mit dem Sitzrohr 15 fest verbunden ist, und an dem Dorn befestigt. Das Kabel 22 bildet dabei eine erste Bucht 24, die zu dem zweiten Ende 20 des Kabels 22 hin geöffnet ist. Weiterhin bildet das Kabel 22 eine zweite Bucht 25 aus, die zum Gleitrohr 2 hin geöffnet ist. Wenn nun das Gleitrohr 2 in dem Standrohr 3 entlang des Doppelpfeils 21 verschoben wird, verändert sich ein Abstand X zwischen der zweiten Bucht 25 und dem Dorn 23. Natürlich kann das Kabel 22 auch in einem Schutzschlauch geführt sein oder auch in einem Kabelschleppsystem, das ähnlich einer Kette funktioniert, und bei der das Kabel 22 in der Kette verlegt ist. Hierdurch ist das Kabel 22 zusätzlich während des Verschiebens des Gleitrohres 2 gegenüber Beschädigungen, die möglicherweise durch das Standrohr 3 oder das Sitzrohr 15 verursacht werden könnten, geschützt.

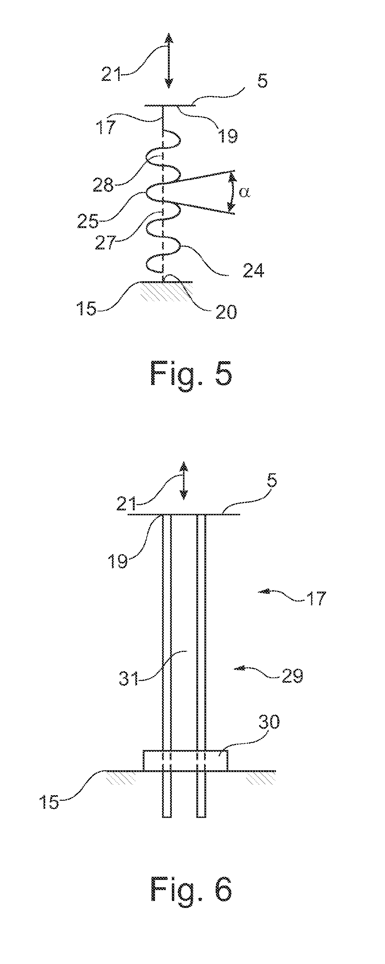

Figur 5 zeigt eine dritte Ausführungsform der Energieübertragungsvorrichtung 17. Hierbei ist die Energieübertragungsvorrichtung 17 als ein Schlauch 26 ausgebildet. Der Schlauch 26 ist in diesem Ausführungsbeispiel zur Übertragung von Luft als Energie zum Betätigen der Feststellvorrichtung 5 ausgebildet. Auch dieser Schlauch 26 besitzt ein erstes Ende 19 und ein dem ersten Ende 19 gegenüberliegendes zweites Ende 20. Das erste Ende 19 ist mit der Feststellvorrichtung 5 fest verbunden, hingegen ist das zweite Ende 20 fest mit dem Sitzrohr 15 verbunden. Der Schlauch 26 ist biegeschlaff. Die Länge des Schlauches 26 ist größer als der Abstand der Feststellvorrichtung 5 von der Befestigung des Schlauches 26 am Sitzrohr 15. Der Schlauch 26 wird so verlegt, dass sich der Schlauch 26 S-förmig entlang der Längserstreckungsrichtung des Gleitrohres 2 erstreckt. Damit der Schlauch 26 in der S-förmigen Form verbleibt, wird jede sich quer zu der Längserstreckungsrichtung des Gleitrohres 2 bildende Bucht 24, 25 durch eine Zugfeder 27 stabilisiert. Statt der einzelnen Zugfedern 27 kann auch ein durchgehendes Gummiband 28 verwendet werden, wobei dann der Schlauch 26 derart an dem Gummifaden 28 fixiert ist, dass sich einzelne Buchten 24, 25 ausbilden. Wenn das Gleitrohr 2 entlang des Doppelpfeils 21 verschoben wird, kommt es zu einer Dehnung oder Stauchung des Gummifadens 28 bzw. der Federn 27 und damit zu einer Veränderung eines Öffnungswinkels α der Buchten 24, 25.

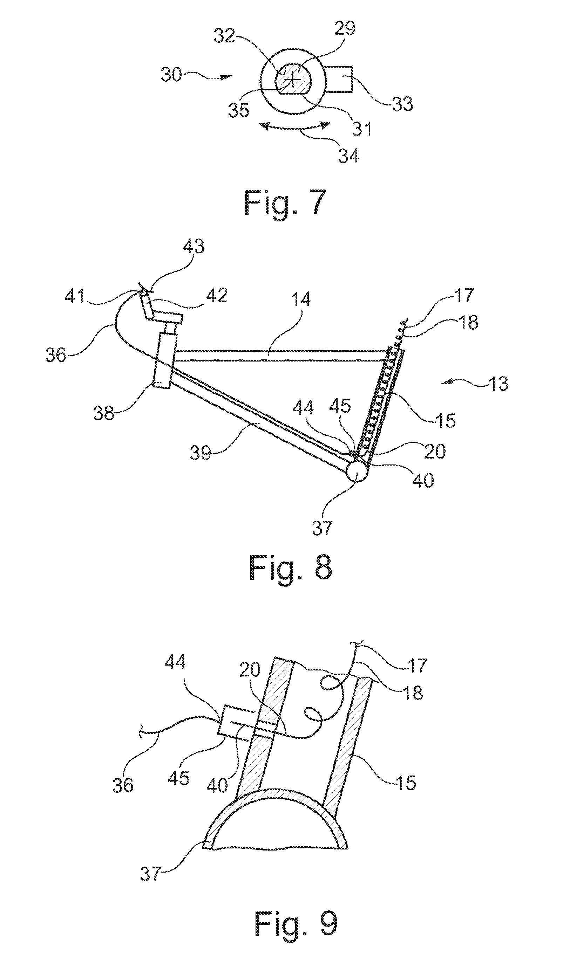

Figur 6 zeigt eine vierte Ausführungsform der Energieübertragungsvorrichtung 17. Die Energieübertragungsvorrichtung 17 besteht aus einer Drehstange 29, die mit ihrem einen Ende 19 mit der Feststellvorrichtung 5 verbunden ist und sich in Längserstreckungsrichtung des Gleitrohrs 2 erstreckt, und einem Mitnehmer 30. Die Drehstange 29 besteht aus einer Rundstange, die eine durchgehende Abflachung 31 aufweist. Deutlich sichtbar wir dies in Figur 7, die einen Querschnitt durch die Drehstange 29 und eine Draufsicht auf den Mitnehmer 30 darstellt. Der Querschnitt durch die Drehstange 29 ist schraffiert ausgeführt.

Der Mitnehmer 30 ist derart in dem Sitzrohr 15 befestigt, dass er sich drehen lässt, jedoch in der Höhe relativ zum Sitzrohr 15 unveränderlich ist. Die Drehstange 29 ist entlang ihrer Längserstreckungsrichtung relativ zu dem Mitnehmer 30 verschiebbar.

Weiterhin ist in Figur 7 deutlich zu erkennen, dass eine innere Öffnung 32 dieses Mitnehmers 30 die Außenkontur der Drehstange 29 aufweist. Zudem weist der Mitnehmer 30 einen Ausleger 33 auf, der fest mit dem Mitnehmer 30 verbunden ist. Ein Auslenken des Auslegers 33 entlang des Doppelpfeils 34 führt zu einer Drehbewegung des Mitnehmers 30 um eine Drehachse 35. Durch ein Drehen des Mitnehmers 30 wird die Drehstange 29 gedreht. Durch diese Drehung werden die Klinken 7 der Feststellvorrichtung 5 entriegelt oder verriegelt. Durch ein Entriegeln der Klinken 7 ist das Gleitrohr 2 entlang des Doppelpfeils 21 relativ zum Mitnehmer 29 verschiebbar.

Der Ausleger 33 des Mitnehmers 30 kann durch eine wie in Figur 8 dargestellte Energiezuführungsvorrichtung 36 in einer Ausgestaltung eines Bowdenzuges ausgelenkt werden.

Figur 8 zeigt eine erste Ausführungsform einer Verlegung der Energiezuführungsvorrichtung 36. Der hier dargestellte Fahrradrahmen 13 zeigt neben dem aus Figur 1 bereits bekannten Oberrohr 14 und Sitzrohr 15 eine Tretlageraufnahme 37, einen Lenkkopf 38 sowie ein Unterrohr 39. Aus Übersichtlichkeitsgründen ist die verstellbare Sattelstütze 1 in dieser Darstellung weggelassen, jedoch ist die innerhalb des Sitzrohres 15 verlaufende Energieübertragungsvorrichtung 17 als der spiralförmig geformte Schlauch 18 dargestellt. Das zweite Ende 20 des Schlauchs 18 endet in einem Stecker 40 (siehe Figur 9), der oberhalb der Tretlageraufnahme 37 mit dem Sitzrohr 15 fest verbunden ist und von außen bedienbar ist. Die Energiezuführungsvorrichtung 36 in Form eines Schlauches besitzt ein erstes Ende 41, das mit einem an einem Lenker 42 befestigten Betätigungselement 43 verbunden ist. Das Betätigungselement 43 ist hier als Wippschalter ausgebildet. Ein dem ersten Ende 41 der Energiezuführungsvorrichtung 36 gegenüberliegendes Ende 44 ist mit einer Kupplung 45 fest verbunden. Diese Kupplung 45 lässt sich mit dem Stecker 40 lösbar verbinden. Die Energiezuführungsvorrichtung 36 ist in dem hier vorliegenden Ausführungsbeispiel entlang des Unterrohrs 39 verlegt. Obzwar die längenverstellbare Sattelstütze 1 hier nicht dargestellt ist, lässt sich erkennen, das bei einer Längenverstellung der Sattelstütze 1 lediglich die in dem Sitzrohr 15 verlaufende Spirale 18 gelängt oder verkürzt wird. Eine Schlaufenbildung der Energiezuführungsvorrichtung 36 findet durch diese Längenverstellung nicht statt.

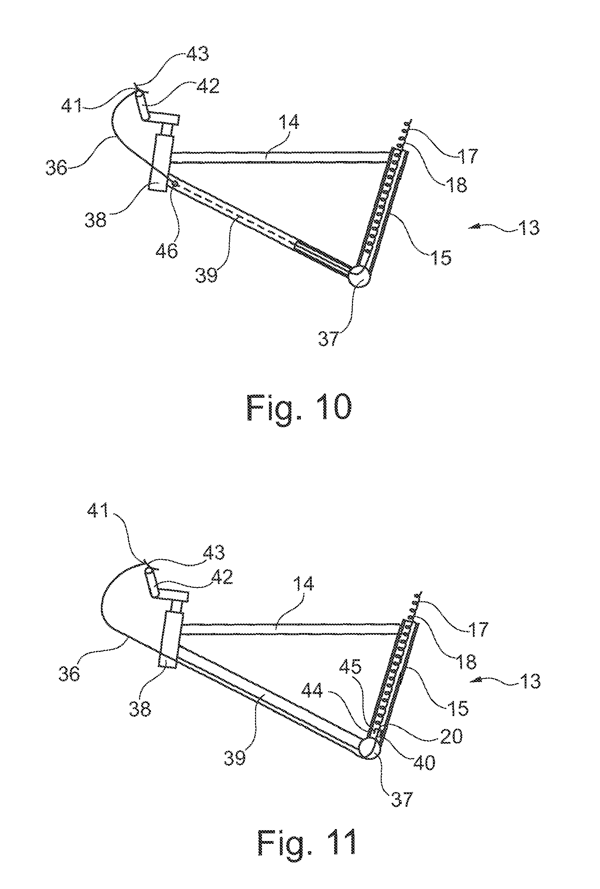

Figur 10 zeigt eine zweite Möglichkeit einer Verlegung der Energiezuführungsvorrichtung 36. Hierzu befindet sich im Unterrohr 39 nahe dem Lenkkopf 38 eine Öffnung 46, durch die die Energiezuführungsvorrichtung 36 in das Unterrohr 39 hineingeführt ist. Die Energiezuführungsvorrichtung 36 wird durch die Tretlageraufnahme 37 durchgeführt und mit der Energieübertragungsvorrichtung 17 verbunden. In dem hier vorliegenden Ausführungsbeispiel ist die Energiezuführungsvorrichtung 36 fest mit der Energieübertragungsvorrichtung 17 verbunden und einstückig ausgeführt. Somit besteht im Gegensatz zu der Ausführung in den Figuren 8, 9 in der Figur 10 keine Stecker-Kupplung-Kombination 40, 45. Auch ist hier im Gegensatz zu der in Figur 8 dargestellten Verlegung die Energiezuführungsvorrichtung 36 nahezu vollständig innerhalb des als Diamantrahmen ausgebildeten Rahmens 13 verlegt. Die Energiezuführungsvorrichtung 36 ist somit vor Beschädigungen geschützt, die beispielsweise durch Steine hervorgerufen werden können, die von einem hier nicht dargestellten Vorderrad empor gewirbelt werden können.

Figur 11 zeigt ein drittes Ausführungsbeispiel einer Verlegung der Energiezuführungsvorrichtung 36. Im Gegensatz zu Figur 8 wird hier die Energiezuführungsvorrichtung 36 entlang des Unterrohres 39 bis zur Tretlageraufnahme 37 geführt und durch die Tretlageraufnahme 37 hindurch in das Sitzrohr 15 hinein bis zur Energieübertragungsvorrichtung 17. In dem hier vorliegenden Ausführungsbeispiel ist die Energiezuführungsvorrichtung 36 mittels einer im Sitzrohr 15 angeordneten Stecker-Kupplung-Kombination 40, 45 mit der Energieübertragungsvorrichtung 17 verbunden, wobei der Stecker 40 am Sitzrohr 15 fixiert ist. Natürlich könnte auch die Energieübertragungsvorrichtung 17 bis in die Tretlageraufnahme 37 ragen und die Stecker-Kupplung-Kombination 40, 45 an der Tretlageraufnahme 37 befestigt sein.

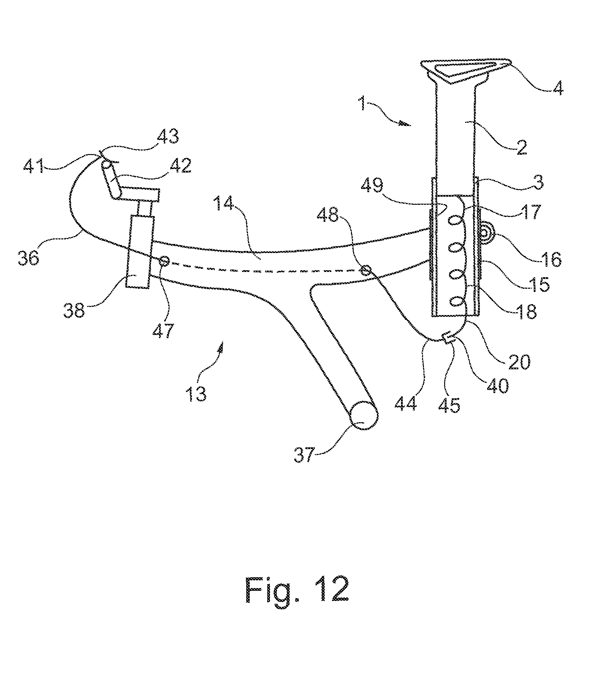

Figur 12 zeigt eine Ausführungsform zur Verlegung der Energiezuführungsvorrichtung 36 an dem in einer sogenannten Y-Form ausgebildeten Fahrradrahmen 13. Das mit dem Oberrohr 14 verbundene Sitzrohr 15 gleicht einem Rohrstummel, so dass das durch die Öffnung 49 in das Sitzrohr 15 hineingeführte Standrohr 3 in Richtung der Tretlageraufnahme 37 aus dem Sitzrohr 15 heraustritt. Die als Spirale 18 ausgebildete Energieübertragungsvorrichtung 17 ragt aus dem Standrohr 3, zumindest wenn sich die längenverstellbare Sattelstütze 1 in der ersten, zusammengeschobenen Position befindet. Das Oberrohr 14 weist nahe dem Lenkkopf 38 eine erste Öffnung 47 und nahe des Sitzrohres 15 eine zweite Öffnung 48 auf. Die Energiezuführungsvorrichtung 36 wird durch die erste Öffnung 47 in das Oberrohr 14 hinein und durch die zweite Öffnung 48 aus dem Oberrohr 14 wieder heraus geführt. Das zweite Ende 44 der Energiezuführungsvorrichtung 36 ist mit der Kupplung 45 fest verbunden. Die Kupplung 45 wird mit dem Stecker 40 der Energieübertragungsvorrichtung 17 lösbar verbunden. In der vorliegenden Figur 11 ist deutlich erkennbar, dass bei einem Verschieben des Gleitrohres 2 der verstellbaren Sattelstütze 1 es auch hier zu keiner den Fahrer behindernden oder zumindest störenden Schlaufenbildung der Energiezuführungsvorrichtung 36 oder auch der Energieübertragungsvorrichtung 17 kommt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Verstellbare Sattelstütze
- 2: Gleitrohr
- 3: Standrohr
- 4: Aufnahme für Fahrradsattel
- 5: Feststellvorrichtung
- 6: Erste Öffnung
- 7: Klinken
- 8, 8': Vertiefung
- 9: Zweite Öffnung
- 10: Innenwandung
- 11: Nut
- 12: Zapfen
- 13: Fahrradrahmen
- 14: Oberrohr
- 15: Sitzrohr
- 16: Sattelklemme
- 17: Energieübertragungsvorrichtung
- 18: Schlauch
- 19: Erstes Ende
- 20: Zweites Ende
- 21: Doppelpfeil
- 22: Kabel
- 23: Dorn
- 24: Erste Bucht
- 25: Zweite Bucht
- 26: Schlauch
- 27: Zugfeder
- 28: Gummiband
- 29: Drehstange
- 30: Mitnehmer
- 31: Abflachung
- 32: Öffnung
- 33: Ausleger
- 34: Doppelpfeil
- 35: Drehachse
- 36: Energiezuführungsvorrichtung
- 37: Tretlageraufnahme
- 38: Lenkkopf
- 39: Unterrohr
- 40: Stecker
- 41: Erstes Ende
- 42: Lenker
- 43: Betätigungselement
- 44: Zweites Ende
- 45: Kupplung
- 46: Öffnung im Unterrohr
- 47: Erste Öffnung
- 48: Zweite Öffnung
- 49: Öffnung

- X: Abstand
- α: Öffnungswinkel

## Patentansprüche

1. Längenverstellbare Sattelstütze für ein Fahrrad, wobei die längenverstellbare Sattelstütze (1) aufweist:
ein Standrohr (3) mit einer ersten Öffnung (6) und einer zweiten der ersten Öffnung (6) gegenüberliegenden Öffnung (9);
ein Gleitrohr (2);
eine Feststellvorrichtung (5); und
eine Energieübertragungsvorrichtung (17);
wobei das Gleitrohr (2) durch die erste Öffnung (6) in das Standrohr (3) geführt ist;
wobei das Gleitrohr (2) entlang einer Längserstreckungsrichtung des Standrohres (3) verschiebbar ist;
wobei das Gleitrohr (2) relativ zum Standrohr (3) von einer ersten in eine zweite Position und umgekehrt bewegbar ist;
wobei eine Überdeckung zwischen Standrohr (3) und Gleitrohr (2) in der ersten Position größer als in der zweiten Position ist;
wobei die Feststellvorrichtung (5) von einer feststellenden Position in eine freigebende Position und umgekehrt verbringbar ist;
wobei in der feststellenden Position das Gleitrohr (2) zum Standrohr (3) festgelegt ist;
wobei die Energieübertragungsvorrichtung (17) eingerichtet ist, um Energie von einem äußeren bereitzustellenden Betätigungselement (43) an die Feststellvorrichtung (5) zum Lösen und/oder Feststellen zu übertragen; und
wobei die Energieübertragungsvorrichtung (17), mindestens wenn sich das Gleitrohr (2) in der zweiten Position befindet, von einem äußeren bereitzustellenden Betätigungselement (43) durch die zweite Öffnung (9) des Standrohres (3) bis zur Feststellvorrichtung (5) geführt ist.

2. Längenverstellbare Sattelstütze nach Anspruch 1,
wobei das Gleitrohr (2) und das Standrohr (3) zueinander verdrehsicher ausgeformt sind.

3. Längenverstellbare Sattelstütze nach Anspruch 1 oder 2,
wobei an dem Gleitrohr (2) die Feststellvorrichtung (5) angeordnet ist.

4. Längenverstellbare Sattelstütze nach einem der vorhergehenden Ansprüche,
wobei die Feststellvorrichtung (5) durch eine elektrische, pneumatische, hydraulische und/oder mechanische Energieübertragungsvorrichtung (17) feststellbar und/oder lösbar ist.

5. Längenverstellbare Sattelstütze nach einem der vorhergehenden Ansprüche,
wobei die Energieübertragungsvorrichtung (17) zumindest teilweise spiralenförmig (18) ausgeformt ist.

6. Längenverstellbare Sattelstütze nach Anspruch 1 bis 4,
wobei die Energieübertragungsvorrichtung (17) zu mindestens einer Bucht (25) geformt ist;
wobei die Bucht (25) eine Öffnung aufweist, die entweder zum Standrohr (3) hin oder vom Standrohr (3) weg weist.

7. Längenverstellbare Sattelstütze nach Anspruch 1 bis 4,
wobei die Energieübertragungsvorrichtung (17) durch eine Drehstange (29) mit einem Mitnehmer (30) gebildet ist,
wobei entlang der Drehstange (29) entweder die Feststellvorrichtung (5) und/oder der Mitnehmer (30) verschiebbar angeordnet ist.

8. Längenverstellbare Sattelstütze nach einem der vorhergehenden Ansprüche, ferner aufweisend
ein Betätigungselement (43);
wobei das Betätigungselement (43) mit der Energieübertragungsvorrichtung (17) verbunden ist;
wobei das Betätigungselement (43) eingerichtet ist, durch ein Betätigen des Betätigungselements (43) ein Lösen und/oder Feststellen des Feststellelements (5) zu bewirken.

9. Längenverstellbare Sattelstütze nach einem der vorhergehenden Ansprüche, ferner aufweisend
eine Energiezuführungsvorrichtung (36);
wobei ein erstes Ende (41) der Energiezuführungsvorrichtung (36) mit dem Betätigungselement (43) verbunden ist und ein dem ersten Ende (41) gegenüberliegendes zweites Ende (44) der Energiezuführungsvorrichtung (36) mit der Energieübertragungsvorrichtung (17) verbunden ist.

10. Fahrradrahmen mit einer längenverstellbaren Sattelstütze nach einem der Ansprüche 1 bis 9, ferner aufweisend
ein Sitzrohr (15) mit einer an einem Ende befindlichen Öffnung (49);
wobei das Standrohr (3) durch die Öffnung (49) in das Sitzrohr (15) geführt ist;
wobei das Standrohr (3) in dem Sitzrohr (15) in einer vorgewählten Position lösbar befestigt ist; und
wobei die Energieübertragungsvorrichtung (17) innerhalb des Sitzrohres (15) verläuft.

11. Fahrradrahmen nach Anspruch 10,
wobei die Energiezuführungsvorrichtung (17) in das Sitzrohr (15) hineingeführt bzw. die Energieübertragungsvorrichtung (17) aus dem Sitzrohr (15) herausgeführt ist.

12. Fahrradrahmen nach einem der Ansprüche 10 oder 11, ferner aufweisend
ein Unterrohr (39);
wobei die Energiezuführungsvorrichtung (36) mindestens teilweise entlang des Unterrohres (39) verlegt ist.

13. Fahrradrahmen nach Anspruch 12;
wobei die Energiezuführungsvorrichtung (36) zumindest teilweise im Unterrohr (39) verlegt ist.

14. Fahrradrahmen nach einem der Ansprüche 10 bis 13, ferner aufweisend
ein Oberrohr (14);
wobei das Oberrohr (14) mit dem Sitzrohr (15) verbunden ist; und
wobei die Energiezuführungsvorrichtung (36) zumindest teilweise innerhalb des Oberrohres (14) verlegt ist.

15. Fahrrad, insbesondere ein Mountainbike, das mit einem Fahrradrahmen nach einem der Ansprüche 10 bis 14 ausgestattet ist, ferner aufweisend
einen Fahrradlenker (42);
wobei das Betätigungselement (43) lösbar mit dem Fahrradlenker (42) verbunden ist.
